# FASCICULE DE BREVET EUROPEEN

(11) **EP 3 509 774 B1**
(45) Date de publication et mention de la délivrance du brevet: **05.06.2024**
(21) Numéro de dépôt: 17771819.4
(22) Date de dépôt: 07.09.2017
(51) Int. Cl.: B22F 3/105, B29C 67/00, B29C 64/153, B29C 37/00, B23H 1/00, B33Y 10/00, B22F 10/28, B33Y 40/20, B22F 10/66

(54) **PROCEDE DE FABRICATION D'UNE PIECE EN MATERIAU ELECTROCONDUCTEUR PAR FABRICATION ADDITIVE**
VERFAHREN ZUR HERSTELLUNG EINES TEILS AUS ELEKTRISCH LEITENDEM MATERIAL DURCH GENERATIVE FERTIGUNG
METHOD FOR MANUFACTURING A PART OF ELECTROCONDUCTIVE MATERIAL BY ADDITIVE MANUFACTURING

(30) Priorité: 08.09.2016 FR 1658344
(43) Date de publication de la demande: 17.07.2019
(73) Titulaire: Safran, 75015 Paris (FR)
(72) Inventeur: LAURENSAN, Frédéric, 77550 Moissy-cramayel (FR)
(74) Mandataire: Gevers & Orès
(86) Numéro de dépôt international: PCT/FR2017/052385
(87) Numéro de publication internationale: WO 2018/046862

(56) Documents cités:
- EP-A1- 2 540 419
- WO-A1-2008/143106
- WO-A1-2015/092442
- WO-A2-2015/189600
- FR-A1- 2 993 801
- US-A1- 2004 031 780
- US-A1- 2011 170 977
- US-A1- 2015 197 862
- US-A1- 2016 001 365
- US-A1- 2016 031 010

## Description

### DOMAINE TECHNIQUE

La présente invention concerne un procédé de fabrication d'une pièce en matériau électroconducteur et de de son référentiel pour la reprise d'usinage, par fabrication additive en particulier sur lit de poudre.

### ETAT DE L'ART

Il est connu de fabriquer des pièces par fabrication additive, en particulier dans le domaine aéronautique. Différentes techniques existent et une des techniques consiste à fusionner de la poudre au moyen d'un faisceau de haute énergie tel qu'un faisceau laser (technologie SLM, acronyme de *Selective Laser Melting*). En pratique, un lit de poudre est déposé sur un plateau support et est balayé par le faisceau laser pour fabriquer la pièce couche par couche, une troisième couche de poudre fusionnée étant disposée au-dessus d'une deuxième couche qui est elle-même disposée au-dessus d'une première couche.

Le plateau support est de même nature que la poudre et sert de surface de démarrage et d'accroche, puis de référence à la pièce qui est fabriquée dessus. La pièce est alors soudée au plateau support et doit en être détachée en fin de fabrication.

La séparation de la pièce du plateau support est en général réalisée par découpe de la pièce dans un plan parallèle au plateau support. La pièce est en général reprise par usinage pour la mettre à des côtes prédéterminées. La découpe peut être faite par sciage ou par électroérosion par la technologie EDM (acronyme de *Electrical Discharge Machining*), qui a l'avantage de réduire les efforts mécaniques sur les pièces.

La technologie EDM est mise en oeuvre en connaissant précisément la position dans l'espace de la pièce à découper, et donc en connaissant les coordonnées de la pièce selon les références XYZ. Cependant, la fabrication additive par SLM ne permet pas le suivi de ces références avec la technique actuelle. La découpe est donc en général réalisée au plus près du plateau support et la pièce découpée est reprise par usinage, ce qui oblige à la monter sur une machine de reprise, ce qui est long et coûteux.

Il existe donc un besoin de simplifier la désolidarisation d'une pièce réalisée par fabrication additive d'un plateau support, au moyen d'une technique de découpe suivant un profil précis et industriellement applicable afin de limiter voire de supprimer les opérations postérieures de reprise de pièce.

La présente invention propose une solution simple, efficace et économique à ce problème.

Le document EP 2540419 A1 divulgue un procédé de fabrication d'un composant de moteur par fabrication additive sur un bloc de base.

### EXPOSE DE L'INVENTION

L'invention propose à cet effet un procédé de fabrication d'au moins une pièce en matériau électroconducteur par fabrication additive sur lit de poudre, comprend une étape consistant à :
a) au moyen d'une première machine de fabrication additive, fabriquer ladite au moins une pièce sur un plateau support, couche par couche, ladite pièce étant délimitée par une portion de surface de contour externe qui est en regard et espacée dudit plateau support, et qui est reliée audit plateau support par au moins un pont de matière de support de la pièce, caractérisé en ce qu'il comprend en outre les étapes consistant à :
b) au moyen de ladite première machine de fabrication additive, fabriquer un élément de référence sur le plateau support dans une position prédéterminée à distance de ladite pièce, de façon à ce que ladite au moins une pièce soit localisée dans l'espace par rapport audit élément de référence,
c) monter ledit plateau support sur une seconde machine de découpe de ladite au moins une pièce, et le positionner sur ladite machine en fonction de la position dudit élément de référence,
d) utiliser un fil de ladite seconde machine pour découper par électroérosion ladite au moins une pièce en le passant entre ladite au moins une pièce et ledit plateau support, le long et au niveau de ladite portion de surface.

Le procédé selon l'invention utilise ainsi deux machines, une première machine de fabrication additive et une seconde machine de découpe par électroérosion. Selon l'invention, un même plateau sert de support à la pièce lors de sa fabrication et lors de sa découpe. Pour cela, le plateau support comprend un élément de référence qui permet de localiser précisément la pièce sur le plateau support, ce qui facilite l'opération de découpe. En effet, le montage du plateau support sur la seconde machine permet à la seconde machine de connaître précisément la position de la pièce en vue de sa découpe, grâce à l'élément de référence. La découpe de la pièce peut alors être réalisée selon une trajectoire complexe et en particulier non parallèle au plateau support. La découpe peut être réalisée aux côtes finies de la pièce. L'invention permet ainsi de supprimer les opérations de la technique antérieure, postérieures à la découpe de la pièce, et consistant notamment à positionner précisément la pièce selon les références XYZ et à procéder à sa reprise par usinage.

Le procédé selon l'invention peut comprendre une ou plusieurs des caractéristiques ou étapes suivantes, prises isolément les unes des autres ou en combinaison les unes avec les autres :
- l'étape b) est réalisée avant, pendant ou après l'étape a),
- plusieurs pièces identiques sont fabriquées simultanément à l'étape a), et comportent des portions de surface de contour externe qui sont alignées de façon à ce que ledit fil découpe simultanément l'ensemble des pièces à l'étape d),
- ladite pièce ou chacune desdites pièces est fabriquée à l'étape a) avec au moins une colonnette de support, qui est supprimée par découpe à l'étape d),
- ladite au moins une colonnette de support comble au moins en partie au moins un orifice traversant de la pièce ou chacune desdites pièces,
- ladite portion de surface ou chacune desdites portions de surface est non parallèle audit plateau support,
- ledit pont de matière forme un décrochement avec ladite portion de surface ou chacune desdites portions de surface, ledit décrochement ayant une épaisseur configurée pour faciliter la prise d'origine d'usinage ou de découpe voire également la fin de la découpe par ledit fil à l'étape d), et
- ledit élément de référence est réalisé par fabrication additive simultanément ou successivement à la fabrication de la ou des pièces.

### DESCRIPTION DES FIGURES

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
- la figure 1 est une vue très schématique d'une machine de fabrication additive sur lit de poudre,
- la figure 2 est une vue schématique en perspective d'une pièce réalisée avec le procédé selon l'invention,
- les figures 3 à 5 représentent des étapes de réalisation de pièces au moyen d'une première machine de fabrication additive,
- les figures 6 et 7 représentent des étapes de découpe de pièces au moyen d'une seconde machine, et
- la figure 8 est une vue schématique en perspective d'une des pièces obtenues par les étapes illustrées aux figures 3 à 7.

### DESCRIPTION DETAILLEE

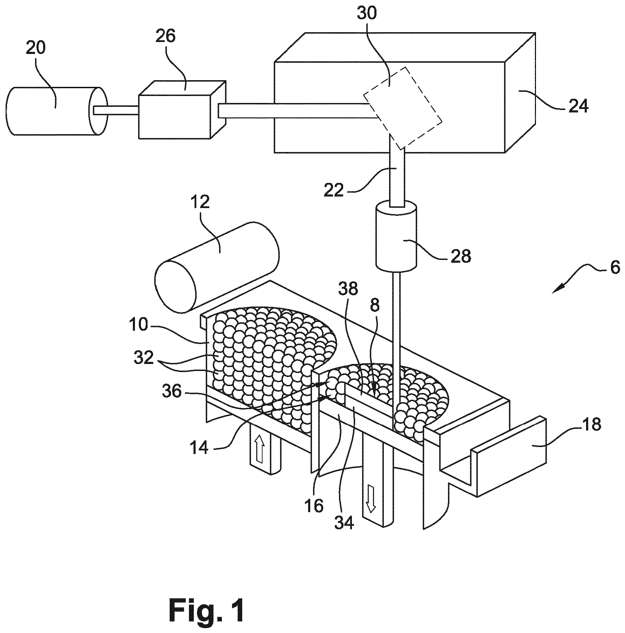

Il existe deux types de fabrication additive d'une pièce : soit la pièce est réalisée par dépôts successifs de matière fondue, soit la pièce est réalisée par fusion sélective sur lit de poudre comme illustré à la figure 1.

La machine 6 de la figure 1 permet de fabriquer une pièce 8 par exemple aéronautique par fusion sélective de couches de poudre par faisceau de haute énergie.

La machine 6 comprend un bac d'alimentation 10 contenant de la poudre d'un matériau électroconducteur, un rouleau 12 pour transvaser cette poudre depuis ce bac 10 et étaler une première couche 14 de cette poudre sur un plateau 16 de support de construction (il peut s'agir d'un support massif, d'une partie d'une autre pièce ou d'une grille support utilisée pour faciliter la construction de certaines pièces).

La machine 6 comprend également un bac de recyclage 18 pour récupérer une infime partie de la poudre usagée (en particulier non fondue ou non frittée) et la majeure partie de la poudre en excès, après étalement de la couche de poudre sur le plateau support 16. Ainsi, la majeure partie de la poudre du bac de recyclage 18 est composée de poudre neuve ou recyclée. Aussi, ce bac de recyclage 18 est communément appelé par la profession bac de trop plein ou cendrier.

La machine 6 comprend également un générateur 20 de faisceau laser 22, et un système de pilotage 24 apte à diriger ce faisceau 22 sur n'importe quelle région du plateau support 16 de façon à balayer n'importe quelle région d'une couche de poudre. La mise en forme du faisceau laser et la variation de son diamètre sur le plan focal se font respectivement au moyen d'un dilatateur de faisceau 26 et d'un système de focalisation 28, l'ensemble constituant un système optique.

Ce dispositif pour appliquer le procédé assimilable à un procédé de dépôt direct de métal ou DMD (acronyme de l'anglais *Direct Metal Déposition*) sur une poudre peut utiliser n'importe quel faisceau de haute énergie en place du faisceau laser 22, tant que ce faisceau est suffisamment énergétique pour dans le premier cas fondre ou dans l'autre cas former des cols ou ponts entre les particules de poudre et une partie du matériau sur lequel les particules reposent.

Le rouleau 12 peut être remplacé par un autre système de dépose approprié, tel qu'un dévidoir (ou trémie) associé à une lame de raclage, à un couteau ou à une brosse, apte à transvaser et étaler la poudre en couche.

Le système de pilotage 24 comprend par exemple au moins un miroir 30 orientable sur lequel le faisceau laser 22 se réfléchit avant d'atteindre une couche de poudre dont chaque point de la surface se trouve située toujours à la même hauteur par rapport à la lentille de focalisation, contenue dans le système de focalisation 28, la position angulaire de ce miroir 30 étant pilotée par une tête galvanométrique pour que le faisceau laser balaye au moins une région de la première couche de poudre, et suive ainsi un profil de pièce pré-établi.

La machine 6 fonctionne de la façon suivante. On dépose à l'aide du rouleau 12 une première couche 14 de poudre d'un matériau sur le plateau support 16, cette poudre étant transvasée depuis un bac d'alimentation 10 lors d'un mouvement aller du rouleau 12 puis elle est raclée, et éventuellement légèrement compactée, lors d'un (ou de plusieurs) mouvement(s) de retour du rouleau 12. L'excédent de poudre est récupéré dans le bac de recyclage 18. On porte une région de cette première couche 14 de poudre, par balayage avec le faisceau laser 22, à une température supérieure à la température de fusion de cette poudre (température de liquidus). La tête galvanométrique est commandée selon les informations contenues dans la base de données de l'outil informatique utilisé pour la conception et la fabrication assistées par ordinateur de la pièce à fabriquer. Ainsi, les particules de poudre 32 de cette région de la première couche 14 sont fondues et forment un premier cordon 34 d'un seul tenant, solidaire avec le plateau support 16. A ce stade, on peut également balayer avec le faisceau laser plusieurs régions indépendantes de cette première couche pour former, après fusion et solidification de la matière, plusieurs premiers cordons 34 disjoints les uns des autres. On abaisse le plateau support 16 d'une hauteur correspondant à l'épaisseur déjà définie de la première couche (entre 20 et 100 µm et en général de 30 à 50 µm). L'épaisseur de la couche de poudre à fusionner ou à consolider reste une valeur variable d'une couche à l'autre car elle est fort dépendante de la porosité du lit de poudre et de sa planéité alors que le déplacement pré-programmé du plateau support 16 est une valeur invariable au jeu près. On dépose ensuite une deuxième couche 36 de poudre sur la première couche 14 et sur ce premier cordon 34, puis on chauffe par exposition au faisceau laser 22 une région de la deuxième couche 36 qui est située partiellement ou complètement au-dessus de ce premier cordon 34, de telle sorte que les particules de poudre de cette région de la deuxième couche 36 sont fondues, avec au moins une partie du premier cordon 34, et forment un deuxième cordon 38 d'un seul tenant ou consolidé, l'ensemble de ces deux cordons 34 et 38 formant ainsi un bloc. A cet effet, le deuxième cordon 38 est avantageusement déjà entièrement lié dès qu'une partie de ce deuxième cordon 38 se lie au premier cordon 34. On comprend que selon le profil de la pièce à construire, et notamment dans le cas de surface en contre-dépouille, il se peut que la région précitée de la première couche 14 ne se trouve pas, même partiellement, en dessous de la région précitée de la deuxième couche 36, de sorte que dans ce cas le premier codon 34 et le deuxième cordon 38 ne forment alors pas un bloc d'un seul tenant. On poursuit ensuite ce processus de construction de la pièce couche par couche en ajoutant des couches supplémentaires de poudre sur l'ensemble déjà formé. Le balayage avec le faisceau 22 permet de construire chaque couche en lui donnant une forme en accord avec la géométrie de la pièce à réaliser. Les couches inférieures de la pièce se refroidissent plus ou moins vite au fur et à mesure que les couches supérieures de la pièce se construisent.

Afin de diminuer la contamination de la pièce, par exemple en oxygène dissous, en oxyde(s) ou en un autre polluant lors de sa fabrication couche par couche telle que décrite ci-dessus, cette fabrication doit être effectuée dans une enceinte à degré d'hygrométrie contrôlée et adaptée au couple procédé/matériau, remplie d'un gaz neutre (non réactif) vis-à-vis du matériau considéré tel que l'azote (N2), l'argon (Ar) ou l'hélium (He) avec ou non addition d'une faible quantité d'hydrogène (H2) connu pour son pouvoir réducteur. Un mélange d'au moins deux de ces gaz peut être aussi considéré. Pour empêcher la contamination, notamment par l'oxygène du milieu environnant, il est d'usage de mettre cette enceinte en surpression.

Ainsi selon l'état de l'art actuel, la fusion sélective ou le frittage sélectif par laser permet de construire avec une bonne précision dimensionnelle des pièces faiblement polluées dont la géométrie en trois dimensions peut être complexe.

La fusion sélective ou le frittage sélectif par laser utilise en outre de préférence des poudres de morphologie sphérique, propres (c'est-à-dire non contaminées par des éléments résiduels provenant de la synthèse), très fines (la dimension de chaque particule est comprise entre 1 et 100 µm et de préférence entre 45 et 90 µm), ce qui permet d'obtenir un excellent état de surface de la pièce finie.

La fusion sélective ou le frittage sélectif par laser permet par ailleurs une diminution des délais de fabrication, des coûts et des frais fixes, par rapport à une pièce moulée, injectée ou usinée dans la masse.

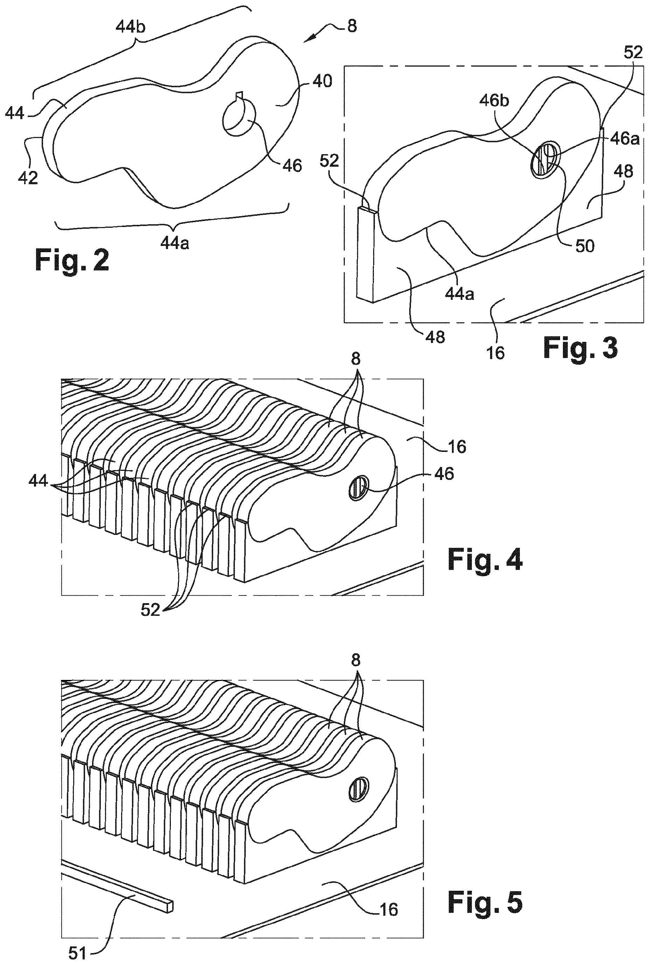

Les figures 2 et suivantes illustrent un mode de réalisation du procédé selon l'invention.

La figure 2 illustre un exemple de pièce 8 qui peut être fabriquée au moyen de la machine 6, cette pièce 8 ayant ici une forme complexe. Elle a globalement une forme plane et épaisse, dont le contour est sensiblement patatoïde. Elle présente ainsi deux faces, respectivement avant 40 et arrière 42, sensiblement parallèles, et une surface de contour 44 qui suit le contour précité en étant sensiblement perpendiculaire aux faces 40, 42 précitées. Les faces 40, 42 sont ici sensiblement verticales dans l'exemple représenté.

La pièce 8 comprend en outre un orifice 46 traversant sensiblement cylindrique, dont les extrémités débouchent respectivement sur les deux faces avant 40 et arrière 42.

La surface de contour 44 de la pièce 8 comprend une portion inférieure 44a orientée vers le bas, et une portion supérieure 44b orientée vers le haut.

Une première étape du procédé représentée à la figure 3 consiste à utiliser une machine 6 de fabrication additive telle que celle représentée à la figure 1 pour réaliser la pièce 8 de la figure 2 sur un plateau support 16. La pièce 8 de forme complexe doit être soutenue pour ne pas s'affaisser du fait de contraintes de fabrication. La portion inférieure 44a de surface de contour de la pièce, qui fait face au plateau support 16, est ainsi reliée au plateau support par au moins un pont de matière 48 de support de la pièce. Le pont de matière 48 est ici sensiblement vertical et s'étend sur toute l'épaisseur de la pièce 8. De la même façon, la portion supérieure 46a de la surface cylindrique interne de l'orifice 46 est reliée par des colonnettes de support 50 sensiblement verticales à la portion inférieure 46b de cette surface cylindrique, de façon à supporter la matière en cours de fabrication située verticalement au-dessus de l'orifice 46.

On comprend que la portion inférieure 44a de surface de contour 44 est une portion fictive tant que la pièce n'est pas découpée. Le pont de matière 48 précité s'étend sur toute l'étendue de la portion 44, c'est-à-dire jusqu'aux zones de jonction des portions 44a, 44b. Dans ces zones, le pont de matière 48 comprend des surépaisseurs de manière à créer des décrochements 52 pour faciliter la prise de référence de la découpe par un fil, par exemple en laiton, comme cela sera expliqué plus en détail dans ce qui suit.

Comme cela est visible à la figure 4, plusieurs pièces 8 identiques peuvent être fabriquées simultanément sur le plateau support 16. Les pièces 8 sont ici fabriquées en étant disposées les unes à côté des autres et espacées les unes des autres. Les pièces 8 sont disposées de façon à ce que leurs surfaces de contour 44 soient alignées, ainsi que leurs orifices 46.

Une autre étape du procédé, qui peut intervenir avant, pendant ou après l'étape de fabrication des pièces 8, consiste à prévoir un élément de référence 51 sur le plateau support. Dans l'exemple représenté, l'élément de référence 51 est une barrette rapportée sur la face supérieure du plateau support 16 à proximité des pièces 8. Elle s'étend ici sensiblement parallèlement à l'axe des orifices 46 ou l'axe pièce. Elle a en section transversale une forme sensiblement rectangulaire.

Avantageusement, l'élément de référence 51 est fabriqué simultanément aux pièces 8, donc par fabrication additive. C'est donc le système informatique associé à la machine 6 de fabrication additive qui détermine avec précision les positions relatives des pièces 8 et de l'élément de référence 51.

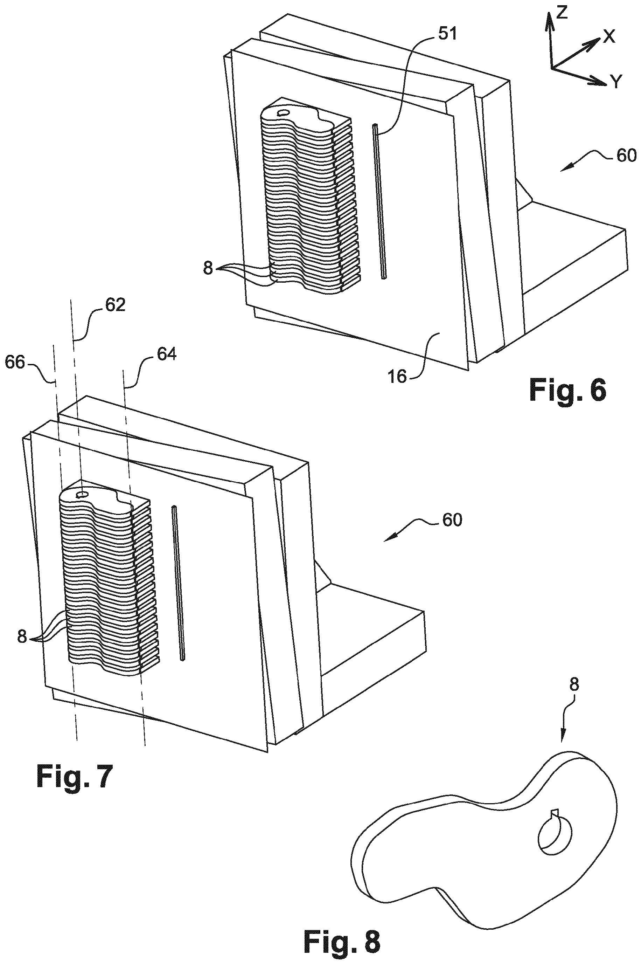

Après l'achèvement des pièces 8 par fabrication additive, le plateau support 16 est démonté de la première machine 10 et monté sur une seconde machine 60 de découpe par électroérosion. La machine est partiellement et très schématiquement représentée par une équerre de montage à la figure 6.

Le plateau support 16 est positionné avec précision dans un repère orthonormé XYZ sur la machine 60. C'est l'élément de référence 51 qui permet au plateau 16 d'être dans une position précise sur la machine 60. Pour cela, la machine 60 peut être équipée d'un palpeur ou comprendre des moyens destinés à venir en butée sur l'élément de référence 51. Le plateau 16 est alors déplacé en translation selon les axes Y et Z et/ou en rotation autour de l'axe X jusqu'à ce que l'élément de référence soit correctement positionné et que sa position soit enregistrée par le système informatique associé à la machine 60. Le plateau 16 est alors bridé à l'équerre de montage.

Les positions des pièces 8 vis-à-vis de l'élément de référence 51 sont connues, et leurs formes et dimensions sont également connues. Ces données son enregistrées dans le logiciel informatique de la machine 60, ce qui lui permet de déterminer les trajectoires du fil de découpe.

La découpe est réalisée par électroérosion, le fil étant alimenté avec un courant électrique. Le fil est déplacé dans la matière à découper et des décharges électriques entre la matière (électroconductrice) et le fil entraînent une découpe de la matière par électroérosion.

Le pont de matière 48 a de préférence une épaisseur au niveau des décrochements 52 qui est au moins égale à 1mm (mesurée dans le plan de la pièce 8 considérée) de façon à autoriser le passage du fil de découpe 46 entre la pièce et le plateau support, le fil ayant un diamètre au plus égal à 1mm dans l'exemple représenté.

Dans l'exemple représenté à la figure 7, le fil (schématiquement représenté par les traits pointillés 62) est tout d'abord inséré dans les orifices 46 des pièces, qui sont partiellement obturés par les colonnettes 50, et le fil est déplacé autour de l'axe des orifices 46 pour découper les colonnettes à leurs extrémités et définir ainsi les surfaces cylindriques des orifices 46 des pièces, selon deux étapes successives.

Le fil (schématiquement représenté par les traits pointillés 64) est ensuite déplacé le long des portions 44a des pièces en commençant par engager le fil au niveau des décrochements 52 d'un côté des pièces 8 et en achevant la découpe par les décrochements du côté opposé (le fil en sortie étant schématiquement représenté par les traits pointillés 66).

On obtient alors une série de pièces 8 découpées aux côtes finies, telles que celle représentée à la figure 8.

## Revendications

1. Procédé de fabrication d'au moins une pièce (8) en matériau électroconducteur par fabrication additive sur lit de poudre, comprenant une étape consistant à :
a) au moyen d'une première machine (10) de fabrication additive, fabriquer ladite au moins une pièce sur un plateau support (16), couche par couche, ladite pièce étant délimitée par une portion (44a) de surface de contour externe (44) qui est en regard et espacée dudit plateau support, et qui est reliée audit plateau support par au moins un pont de matière (48) de support de la pièce,
**caractérisé en ce qu'**il comprend en outre les étapes consistant à :
b) au moyen de ladite première machine (10) de fabrication additive, fabriquer un élément de référence (51) sur le plateau support dans une position prédéterminée à distance de ladite pièce, de façon à ce que ladite au moins une pièce soit localisée dans l'espace par rapport audit élément de référence,
c) monter ledit plateau support sur une seconde machine (60) de découpe de ladite au moins une pièce, et le positionner sur ladite machine en fonction de la position dudit élément de référence,
d) utiliser un fil (62-66) de ladite seconde machine pour découper par électroérosion ladite au moins une pièce en le passant entre ladite au moins une pièce et ledit plateau support, le long et au niveau de ladite portion de surface.

2. Procédé selon la revendication 1, dans lequel plusieurs pièces (8) identiques sont fabriquées simultanément à l'étape a), et comportent des portions (44a) de surface de contour externe qui sont alignées de façon à ce que ledit fil (62-66) découpe simultanément l'ensemble des pièces à l'étape d).

3. Procédé selon la revendication 1 ou 2, dans lequel ladite pièce (8) ou chacune desdites pièces est fabriquée à l'étape a) avec au moins une colonnette de support (50), qui est supprimée par découpe à l'étape d).

4. Procédé selon la revendication précédente, dans lequel ladite au moins une colonnette de support (50) comble au moins en partie au moins un orifice (46) traversant de la pièce (8) ou chacune desdites pièces.

5. Procédé selon l'une des revendications précédentes, dans lequel ladite portion de surface (44a) ou chacune desdites portions de surface est non parallèle audit plateau support (16).

6. Procédé selon l'une des revendications précédentes, dans lequel ledit pont de matière (48) forme un décrochement (52) avec ladite portion de surface (44a) ou chacune desdites portions de surface, ledit décrochement (52) ayant une épaisseur configurée pour faciliter la prise d'origine de découpe voire également la fin de la découpe par ledit fil à l'étape d).

7. Procédé selon l'une des revendications précédentes, dans lequel ledit élément de référence (51) est réalisé simultanément ou successivement à la fabrication de la ou des pièces (8).

## Patentansprüche

1. Verfahren zur Fertigung mindestens eines Werkstücks (8) aus elektrisch leitendem Material durch generative Fertigung auf einem Pulverbett, umfassend einen Schritt, der aus Folgendem besteht:
a) mittels einer ersten Maschine (10) zur generativen Fertigung, Fertigen des mindestens einen Werkstücks auf einer Stützplatte (16), Schicht für Schicht, wobei das Werkstück durch einen Oberflächenabschnitt (44a) mit einem Außenumfang (44) begrenzt wird, der der Stützplatte zugewandt ist und von dieser beabstandet ist und der durch mindestens eine Materialbrücke (48) zur Stützung des Werkstücks mit der Stützplatte verbunden ist,
**dadurch gekennzeichnet, dass** es weiter die Schritte umfasst, die aus Folgendem bestehen:
b) mittels der ersten Maschine (10) zur generativen Fertigung, Fertigen eines Referenzelements (51) auf der Stützplatte in einer vorbestimmten Position in einem Abstand zum Werkstück derart, dass das mindestens eine Werkstück in Bezug auf das Referenzelement im Raum gelegen ist,
c) Anbringen der Stützplatte auf einer zweiten Maschine (60) zum Zuschneiden des mindestens einen Werkstücks, und Positionieren derselben auf der Maschine in Abhängigkeit von der Position des Referenzelements,
d) Verwenden eines Drahts (62-66) der zweiten Maschine, um das mindestens eine Werkstück durch Elektroerosion zuzuschneiden, indem dieser entlang und in Höhe des Oberflächenabschnitts zwischen dem mindestens einen Werkstück und der Stützplatte durchgeführt wird.

2. Verfahren nach Anspruch 1, wobei mehrere identische Werkstücke (8) im Schritt a) gleichzeitig gefertigt werden und Oberflächenabschnitte (44a) mit einem Außenumfang umfassen, die derart ausgerichtet sind, dass der Draht (62-66) die Gesamtheit der Werkstücke im Schritt d) gleichzeitig zuschneidet.

3. Verfahren nach Anspruch 1 oder 2, wobei das Werkstück (8) oder jedes der Werkstücke im Schritt a) mit mindestens einem Stützsäulchen (50) gefertigt wird, das durch das Zuschneiden im Schritt d) beseitigt wird

4. Verfahren nach dem vorstehenden Anspruch, wobei das mindestens eine Stützsäulchen (50) mindestens eine Durchgangsöffnung (46) des Werkstücks (8) oder jedes der Werkstücke zumindest teilweise ausfüllt.

5. Verfahren nach einem der vorstehenden Ansprüche, wobei der Oberflächenabschnitt (44a) oder jeder der Oberflächenabschnitte nicht parallel zur Stützplatte (16) ist.

6. Verfahren nach einem der vorstehenden Ansprüche, wobei die Materialbrücke (48) eine Abweichung (52) zum Oberflächenabschnitt (44a) oder jedem der Oberflächenabschnitte bildet, wobei die Abweichung (52) eine Dicke aufweist, die konfiguriert ist, um den anfänglichen Zuschneideeingriff, sogar ebenfalls des Endes des Zuschneidens durch den Draht im Schritt d) zu erleichtern.

7. Verfahren nach einem der vorstehenden Ansprüche, wobei das Referenzelement (51) gleichzeitig oder sukzessiv zur Fertigung des oder der Werkstücke (8) hergestellt wird.

## Claims

1. A method for manufacturing at least one part (8) of electroconductive material by additive manufacturing on a powder bed, including a step of:
a) by means of a first additive manufacturing machine (10), manufacturing said at least one part on a support plate (16), layer by layer, said part being bounded by a portion (44a) of an outer contour surface (44) which is facing and spaced from said support plate, and which is connected to said support plate by at least one support material bridge (48) of the part,
**characterized in that** it further includes the steps of:
b) by means of said first additive manufacturing machine (10), manufacturing a reference element (51) on the support plate in a predetermined position spaced apart from said part, so that said at least one part is located in the space with respect to said reference element,
c) mounting said support plate on a second machine (60) for cutting said at least one part, and positioning it on said machine based on the position of said reference element,
d) using a wire (62-66) from said second machine to cut by electrical discharge machining said at least one part by passing it between said at least one part and said support plate along and at the level of said surface portion.

2. The method according to claim 1, wherein several identical parts (8) are manufactured simultaneously in step a), and include outer contour surface portions (44a) that are aligned with each other so that said wire (62-66) simultaneously cuts all the parts in step d).

3. The method according to claim 1 or 2, wherein said part (8) or each of said parts is manufactured in step a) with at least one support column (50), which is removed by cutting in step d).

4. The method according to the preceding claim, wherein said at least one support column (50) at least partially fills at least one through hole (46) of the part (8) or each of said parts.

5. The method according to any one of the preceding claims, wherein said surface portion (44a) or each of said surface portions is not parallel to said support plate (16).

6. The method according to any one of the preceding claims, wherein said material bridge (48) forms a recess (52) with said surface portion (44a) or each of said surface portions, said recess (52) having a thickness configured to facilitate the initiation of the cutting or even the end of the cutting by said wire in step d).

7. The method according to any one of the preceding claims, wherein said reference element (51) is produced simultaneously or successively with the manufacturing of the part or parts (8).
